# EUROPEAN PATENT SPECIFICATION

(11) **EP 3 149 988 B1**
(45) Date of publication and mention of the grant of the patent: **01.05.2019**
(21) Application number: 14728897.1
(22) Date of filing: 28.05.2014
(51) Int. Cl.: H04W 28/18, H04W 76/15, H04W 8/18, H04W 48/20, H04W 88/06

(54) **TERMINAL DUAL SIM - DUAL ACCESS HANDLING**
HANDHABUNG EINES ENDGERÄTS MIT DUAL-SIM UND DUALZUGANG
PRISE EN CHARGE DE DOUBLE SIM ET DE DOUBLE ACCÈS D'UN TERMINAL

(43) Date of publication of application: 05.04.2017
(73) Proprietor: Telefonaktiebolaget LM Ericsson (publ), 164 83 Stockholm (SE)
(72) Inventor: TILLMAN, Fredrik, S-226 49 Lund (SE); LINDOFF, Bengt, S-237 35 Bjärred (SE); SUNDSTRÖM, Lars, S-247 91 Södra Sandby (SE)
(74) Representative: Zacco Sweden AB
(86) International application number: PCT/EP2014/061173
(87) International publication number: WO 2015/180779

(56) References cited:
- GB-A- 2 492 577
- US-A1- 2009 046 596
- US-A1- 2009 318 087
- US-A1- 2011 009 136
- US-A1- 2013 203 417

## Description

### TECHNICAL FIELD

The disclosure pertains to the field of dual access handling. More particularly the disclosure relates to methods of handling more than one connection, wherein each connection corresponding to a respective subscriber identity and connecting a wireless device to a respective wireless network, as well as to a corresponding wireless device and to a computer program.

### BACKGROUND

3GPP Long Term Evolution, LTE, is the fourth-generation mobile communication technologies standard developed within the 3rd Generation Partnership Project, 3GPP, to improve the Universal Mobile Telecommunication System, UMTS, standard to cope with future requirements in terms of improved services such as higher data rates, improved efficiency, and lowered costs. In a typical cellular radio system, wireless devices or terminals also known as mobile stations and/or User Equipment units, UEs, communicate via a Radio Access Network, RAN, to one or more core networks. The Universal Terrestrial Radio Access Network, UTRAN, is the radio access network of a UMTS and Evolved UTRAN, E-UTRAN, is the radio access network of an LTE system. In an UTRAN and an E-UTRAN, a UE is wirelessly connected to a Radio Base Station, RBS, commonly referred to as a NodeB, NB, in UMTS, and as an evolved NodeB, eNB or eNodeB, in LTE. An RBS is a general term for a radio network node capable of transmitting radio signals to a UE and receiving signals transmitted by a UE.

An arising scenario today is multiple SIM card devices which potentially carry two or more subscriber identities, typically in the form of SIM cards from a single or multiple operators in the same device, wherein both SIM cards may be active at the same time. Such terminals are also referred to as Dual SIM Dual Active, DSDA, terminals. The subscriber identities in DSDA terminals are managed independent of each other in the case of multiple operators and can be used in parallel for separate, simultaneous network access. The wanted technical solution is to add as little additional hardware as possible for multiple access capability compared to a regular one-SIM solution, i.e. in particular the radio subsystem hardware including front-end modules is typically shared.

When using the same hardware, e.g. a single power amplifier, for two up-link carriers or more, the inherent nonlinear effects of the device will cause intermodulation that may violate spectrum emission requirements. Basically, the only remedy, given no hardware measures, is power back-off causing the output spectrum to decrease in power and eventually fulfil the spectrum emission requirements. However, a significant back-off, in the order of 10-15dB might be necessary, which will impair throughput and coverage significantly. This issue was also highlighted in the standardization work for LTE Rel-11, 3GPP RAN, when considering up-link non-contiguous intra-band carrier aggregation, see agenda item 6.8.1 from 3GPP TSG-RAN WG4 Meeting #64bis named "MPR simulations for NC intra-band CA", reference number R4-125599.

Also an asymmetry in power levels for the two or more independent uplink carriers may further complicate the scenario such that different configurations of carrier frequencies and power levels require different levels of power back-off, at least of the different carriers. The exemplified issue discussed above will also be a concern in the case of multiple power amplifiers. Two power amplifiers, independently operating on respective carriers, will also interact and lead to intermodulation, yet to less extent than above, due to limited coupling loss between them. This drawback is also present when the power amplifiers are connected to different antennas.

The document GB 2 492 577 A is considered representative of the closest prior art. It relates to a multi-SIM wireless device having at least first and second radio systems. The first of the radio systems provides an indication for a second of the radio systems that it is transmitting or is about to transmit. The actual interference caused by transmissions by the first radio system to operation of the second radio system is measured, and/or the likely interference caused by transmissions by the first radio system to operation of the second radio system is estimated. The behavior of at least one of the first and second radio systems is modified in order to reduce the interference depending on the measured actual interference or estimated likely interference.

### SUMMARY

An object of the present disclosure is to provide a wireless device which seeks to mitigate, alleviate, or eliminate one or more of the above-identified deficiencies in the art and disadvantages singly or in any combination and to provide a solution wherein nonlinear effects in the radio will not degrade the performance beyond a certain limit. The idea in the proposed solution is to dynamically limit the allowed Radio Access Technology, RAT, supported frequency plan of the device based on the present active access setup. In essence, the device will adjust its RAT capabilities, including band support, to a level where nonlinear effects in the radio will not degrade the performance beyond a certain limit.

This object is obtained by a method, performed in a wireless device, of handling multi access of more than one connection, each connection corresponding to a respective subscriber identity and connecting the wireless device to a respective wireless network, the method comprising: detecting, for a first connection corresponding to a first subscriber identity, a change in connection properties involving a transition between connection states, or detecting a handover or handover request; determining, for at least one of the other subscriber identities, a set of updated network capabilities comprising combinations of network capabilities feasible for connections in multi-access mode, based on the changed connection properties of the first connection; determining if a handover to another Radio Access Technology RAT or carrier is a feasible combination with the RAT or carrier used for a second subscriber identity; activating a second connection corresponding to the second subscriber identity using the respective determined set of updated network capabilities; reporting at least one determined set of updated network capabilities to a respective communication network, wherein the wireless device reports a user equipment UE capability corresponding to the subset of RATs and/ or carriers that are feasible to combine with the RATs and/or carrier frequencies of other subscriber identities; and denying a handover request of the second connection corresponding to a second subscriber identity if not complying with the respective determined set of updated network capabilities. The advantage of using dynamic sets of, or rather dynamically adapting, network capabilities boils down to avoiding non feasible, or even impossible, combinations of e.g. RATs and frequency bands for multiple independent SIM cards when two or more transmitted, TX, signals are to be transmitted simultaneously. Prior art solutions address this issue by a rapid and large change of output power such as an autonomous TX power back-off i.e. a rapid decrease in output power, which is not issued by the network. However, this could cause lost connections or poor performance.

The detecting may comprise detecting a transition from idle connection state to active connection state, or vice versa, of the first connection. Also, the detecting may comprise detecting a handover or handover request of the first connection. By detecting changes in connection state, the network capabilities are updated continuously when the prerequisites changes.

The determining comprises determining combinations of network capabilities feasible for connections in multi access mode. According to some aspects, the determining comprises using a lookup table with combinations of network capabilities feasible for connections in multi access mode. By determining a set of feasible network capabilities that takes into account factors like carrier band, how intermodulation products would affect other carriers etc., problems with interference and hardware degradation may be avoided. Feasible implies capabilities that do not disturb each other in the wireless device.

According to some aspects, the connection properties comprise at least one of: connection state, frequency bandwidth, carrier frequency, modulation, and power level. By considering all types of connection properties that can affect the other SIM, the device always knows the feasible set of network capabilities for each subscriber identity.

According to some aspects, the method further comprises setting for each subscriber identity, an initial set of network capabilities. According to some aspects, the initial set is equal to the network capabilities of the wireless device.

According to some aspects, the subscriber identity is a Subscriber Identity Module, SIM.

According to some aspects, the method further comprises terminating at least one active connection based on the determined set of updated network capabilities.

According to some aspects, the subscriber identities have different priorities.

According to some aspects, network capabilities comprise at least one of the following parameters: supported radio access technology, RAT, carrier frequency, MIMO capabilities, UE category, Radio Link Protocol parameters, radio parameters, measurement parameters, inter-RAT parameters.

Furthermore, the invention provides a wireless device, configured for handling multi access of more than one connection corresponding to a respective subscriber identity, the wireless device comprising: at least two subscriber identities; a radio communication interface for communication with at least one communication network; processing circuitry configured to cause the wireless device: to detect, for a first connection corresponding to a first subscriber identity, a change in connection properties, involving a transition between connection states, or detecting a handover or handover request, of the radio communication interface, to determine, for at least one of the other subscriber identities, a set of updated network capabilities comprising combinations of network capabilities feasible for connections in multi-access mode, based on the changed connection properties of the first connection, to activate a second connection corresponding to a second subscriber identity using the respective determined set of updated network capabilities; to determine if a handover to another Radio Access Technology RAT or carrier is a feasible combination with the RAT or carrier used for a second subscriber identity; to report at least one determined set of updated network, wherein the wireless device reports a user equipment UE capability corresponding to the subset of RATs and/or carriers that are feasible to combine with the RATs and/or carrier frequencies of other subscriber identities; and to deny a handover request of a second connection corresponding to a second subscriber identity if not complying with the respective determined set of updated network capabilities.

Furthermore, the invention provides a computer program comprising computer program code which, when executed in a wireless device, causes the wireless device to execute the methods described above and below.

The wireless device and the computer program each display advantages corresponding to the advantages already described in relation to the disclosure of the method.

### BRIEF DESCRIPTION OF THE DRAWINGS

The foregoing will be apparent from the following more particular description of the example embodiments, as illustrated in the accompanying drawings in which like reference characters refer to the same parts throughout the different views. The drawings are not necessarily to scale, emphasis instead being placed upon illustrating the example embodiments.
Figure 1 is illustrating a network comprising two access points and a wireless device comprising two SIMs;
Figure 2a is an example of RAT configuration with two uplink carriers in the same band and associated down-link carriers with carrier placement leading to TX intermodulation;
Figure 2b Example of RAT configuration with two uplink carriers in the same band and associated down-link carriers with the uplink of one carrier close to the downlink of the second carrier;
Figure 3 is a flowchart illustrating embodiments of method steps;
Figure 4 is a state diagram illustrating the procedure of having dynamic RAT configuration sets for two SIM cards;
Figure 5 is an example node configuration of a wireless device, according to some of the example embodiments;

### DETAILED DESCRIPTION

Aspects of the present disclosure will be described more fully hereinafter with reference to the accompanying drawings. The apparatus and method disclosed herein can, however, be realized in many different forms and should not be construed as being limited to the aspects set forth herein. In this disclosure we specifically address the dual SIM card scenario, but the same technique can easily be adapted to a multiple SIM card scenario by someone skilled in the art. Like numbers in the drawings refer to like elements throughout.

The terminology used herein is for the purpose of describing particular aspects of the disclosure only, and is not intended to limit the disclosure. As used herein, the singular forms "a", "an" and "the" are intended to include the plural forms as well, unless the context clearly indicates otherwise.

Some of the example embodiments presented herein are directed towards handling multi access of more than one connection. As part of the development of the example embodiments presented herein, a problem will first be identified and discussed.

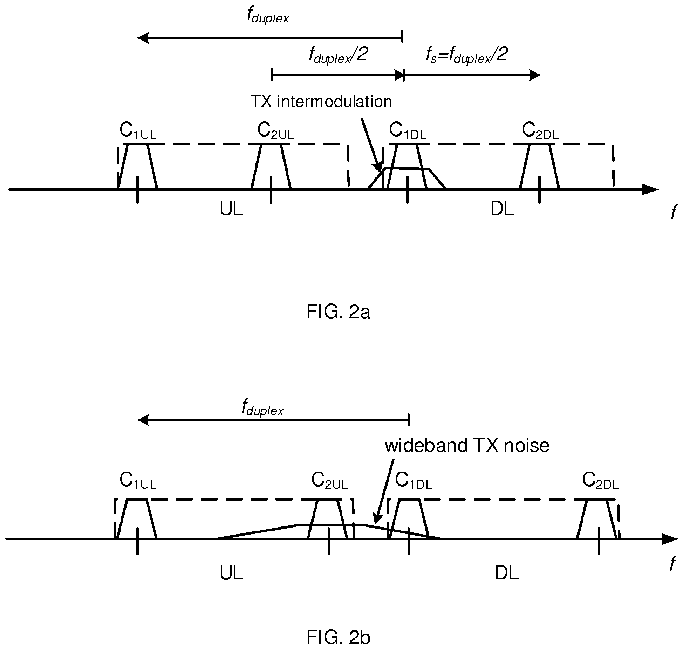

In figure 2a one example of a harmful configuration of a dual SIM wireless device that should be avoided, is shown. The wireless device has two carriers, C₁, C₂, associated with respective SIMs. The carrier frequencies are placed such that transmission, TX, intermodulation distortion aligns with one of the downlink channels, thus leading to co-channel interference. Figure 2a shows an example of a configuration with two uplink carriers, C_{1UL},C_{2UL}, in the same band and associated down-link carriers, C_{1DL}, C_{2DL}, with carrier placement leading to TX intermodulation at C_{1DL}. Due to the intermodulation between the TX frequency components, additional signals occur, not just at harmonic frequencies i.e. at integer multiples, but also at the sum and difference frequencies of the original frequencies and at multiples of those sum and difference frequencies.

In figure 2b, another example of a harmful configuration is shown that should be avoided. Figure 2b is an example of a RAT configuration with two uplink carriers, C_{1UL}, C_{2UL}, in the same band and associated down-link carriers C_{1DL}, C_{2DL}. The uplink of one carrier, C_{2UL}, is located close to the downlink of the second carrier C_{1DL}. The two carriers associated with respective SIMs are placed in the same band but at or close to the edges of the band such that the spectrum emission from one TX carrier leaks into one of the down-link carriers.

The scenarios exemplified above generally apply to bands having a small duplex gap, i.e. the distance in frequency between the up-link part and the down-link part of the band. Spectral emission can also be harmful to other UEs if e.g. the intermodulation products align with another UEs down-link band. Generally, spectrum emission requirements specify limits on such emission to avoid interfering with other UEs.

While the examples above deal with two carriers within the same band it can also be anticipated that a first uplink carrier associated with a first SIM has a frequency such that one of its harmonic components align with second down-link carrier associated with a second SIM. This configuration should also be avoided.

The idea in the proposed solution is to dynamically limit the allowed radio connections in terms of e.g. Radio Access Technology, RAT, and/or frequency plan of the device, based on the present active access setup. In essence, a wireless device will adjust its capabilities, including band support, to a level where e.g. nonlinear effects in the radio will not degrade the performance beyond a certain limit. This has to be done dynamically as e.g. the RAT selection for one subscriber identity affects the possible radio access selection of the other subscriber identity. By keeping momentary dynamic sets of allowed capabilities for the two subscriber identities, and communicating these capabilities to respective operator network when in idle mode or use it at connection setup, i.e. transition from idle to active mode, it may be possible to avoid "bad" configuration setups, which would otherwise result in scenarios where the device would not fulfil spectrum emission requirements.

The term access point, as used in the disclosure, is used for the hardware that is connected to the mobile communications network that communicates directly with communication devices, i.e. a base station. An example of an access point is an evolved Node B, eNB; a base station in LTE. In other words, an access point is typically a base station, e.g. an eNB.

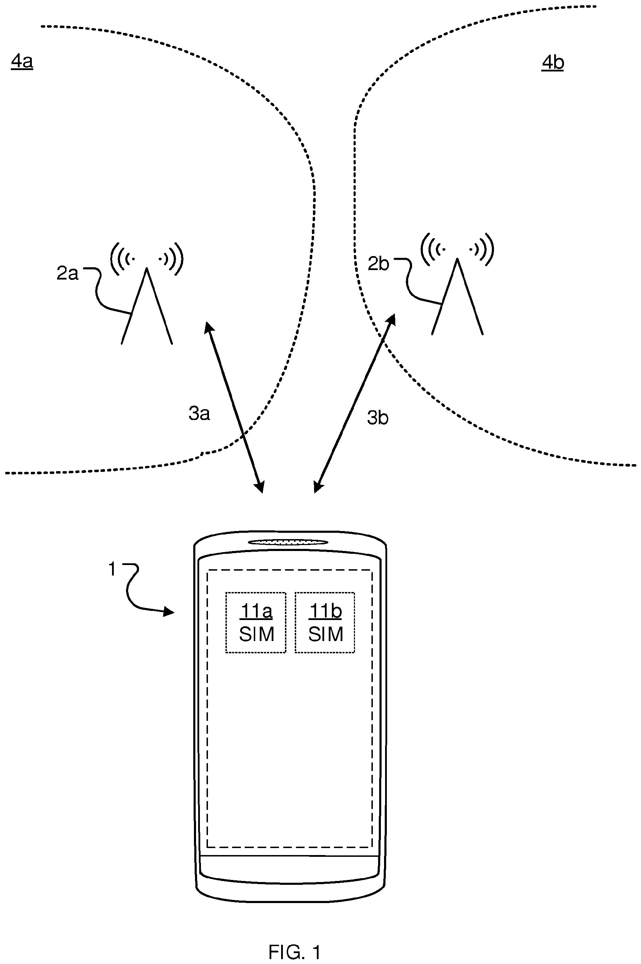

Figure 1 shows a system comprising two access points 2a, 2b and a wireless device 1 comprising two subscriber identities 11a, 11b, where the proposed methods may be implemented Hence the wireless device is a Dual Sim Dual Access, DSDA, device. The subscriber identities of the wireless device can be in different states. In the figure, the access points 2a, 2b belong to different wireless cellular networks 4a, 4b which are hosted by the same or different network operator/s.

When a subscriber identity is in idle state, the UE is not connected. There is no radio link. However, the network knows that the UE is present on the network and is able to reach it in case of an incoming call, via transmission of a paging signal. One example is Radio Resource Control, RRC, idle.

When a subscriber is in an active or connected mode the UE has an established radio connection. The network can transmit/receive data to/from the UE and knows its location at the cell level. The network manages the mobility with handover. One example is Radio Resource Control, RRC, connected mode.

The subscriber identity may as well be powered off or inactivated.

According to one example, the subscriber identities, SIM1 11a and SIM2 11b, are both in idle mode, when the proposed method is initiated. The wireless device 1 signals the capabilities of the respective SIMs to the respective wireless cellular network 4a, 4b, via the connections 3a, 3b. For example, both SIMs are capable of triple mode GSM/WCDMA/LTE and of both Low Band, LB, i.e. 900 MHz and High Band, HB, 1.8, 2, 2.5 GHz.

A "wireless device" as the term may be used herein, is to be broadly interpreted to include a radiotelephone having ability for Internet/intranet access, web browser, organizer, calendar, a camera (e.g., video and/or still image camera), a sound recorder (e.g., a microphone), and/or global positioning system (GPS) receiver; a personal communications system (PCS) user equipment that may combine a cellular radiotelephone with data processing; a personal digital assistant (PDA) that can include a radiotelephone or wireless communication system; a laptop; a camera (e.g., video and/or still image camera) having communication ability; and any other computation or communication device capable of transceiving, such as a personal computer, a home entertainment system, a television, etc. Furthermore, a device may be interpreted as any number of antennas or antenna elements.

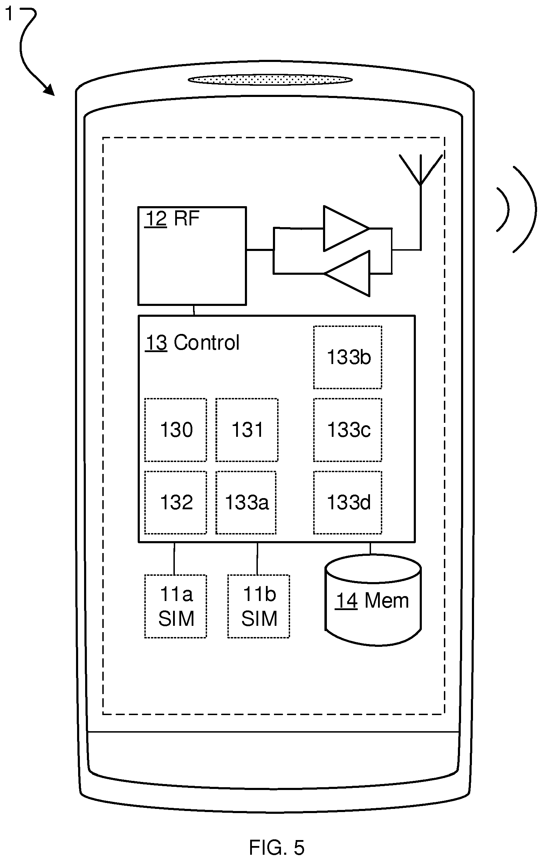

Figure 5 illustrates an example of a wireless device which may incorporate some of the example embodiments discussed above. As shown in figure 5, according to aspects, the wireless device 1 comprises a radio circuitry 12 configured to receive and transmit any form of communications or control signals within a network. It should be appreciated that the radio circuitry 12 according to some aspects comprises any number of transceiving, receiving, and/or transmitting units or circuitry. It should further be appreciated that the radio circuitry 12 may be in the form of any input/output communications port known in the art. The radio circuitry 12 according to some aspects comprises RF circuitry and baseband processing circuitry (not shown).

The wireless device 1 according to some aspects further comprises at least one memory unit or circuitry 14 that may be in communication with the radio circuitry 12. The memory 14 may be configured to store received or transmitted data and/or executable program instructions. The memory 14 may also be configured to store any form of beamforming information, reference signals, and/or feedback data or information. The memory 14 may be any suitable type of computer readable memory and may be of volatile and/or non-volatile type.

The processing circuitry 13 may be any suitable type of computation unit, e.g. a microprocessor, Digital Signal Processor, DSP, Field Programmable Gate Array, FPGA, or Application Specific Integrated Circuit, ASIC, or any other form of circuitry. It should be appreciated that the processing circuitry need not be provided as a single unit but may be provided as any number of units or circuitry.

The wireless device further comprises two subscriber identities 11a, 11b. The subscriber identities are e.g. two subscriber identity modules, SIM. Hence, according to some aspects, the subscriber identities are Subscriber Identity Modules, SIM.

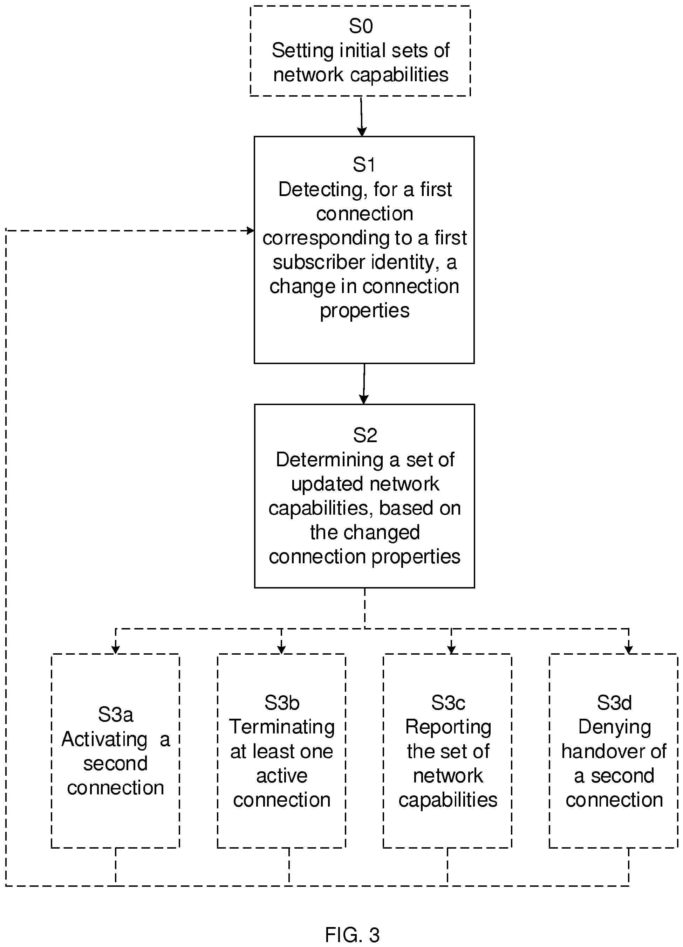

Figures 3 is a flow diagram depicting example operations which may be taken by the wireless device of figure 5, during multi access handling, according to some of the example embodiments.

It should be appreciated that figure 3 comprises some operations which are illustrated with a solid border and some operations which are illustrated with a dashed border. The operations which are comprised in a solid border are operations which are comprised in the broadest example embodiment. The operations which are comprised in a dashed line are example embodiments which may be comprised in, or a part of, or are further operations which may be taken in addition to the operations of the broader example embodiments. It should be appreciated that these operations need not be performed in order. Furthermore, it should be appreciated that not all of the operations need to be performed. The example operations may be performed in any order and in any combination.

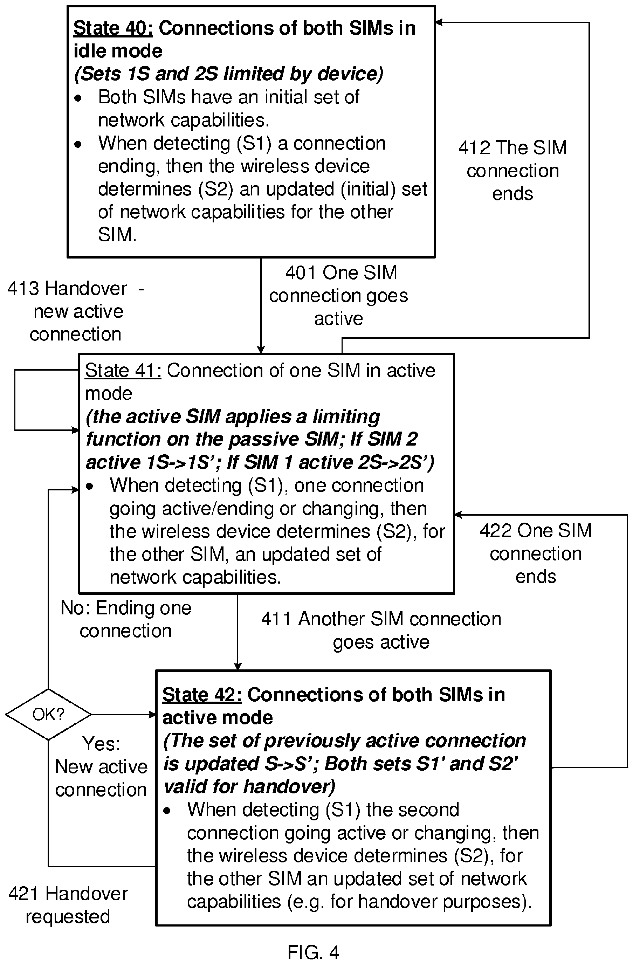

The proposed technique of multi access handling will now be briefly described referring to figure 3 and 5. According to some aspects, the disclosure relates to a method, performed in a wireless device, of handling multi access of more than one connection 3a, 3b, see Figure 1 each connection 3a, 3b corresponding to a respective subscriber identity 11a, 11b and connecting the wireless device to a respective wireless network, in this example wireless cellular networks 4a, 4b. As described above, the method may be performed during different states as will be described in relation to figure 4. However, as an example, let us assume that a wireless device 1, comprising two subscriber identity modules, SIMs 11a, 11b, of two different operators, is powered on and the connections of both SIMs go into idle mode.

According to some aspects, the method comprises an initial step of setting, S0, for each subscriber identity, an initial set of network capabilities. The processing circuitry 13 is configured to setting, S0, for each subscriber identity 11a, 11b, an initial set of network capabilities. According to some aspects, the wireless device comprises an initiator 130 configured for this purpose.

For example, during idle mode of both SIMs, 11a, 11b, the wireless device determines for respective SIM1 and SIM2 a first and a second set of possible Radio Access Technologies, RATs and carrier frequencies for SIM1 and SIM2, respectively. The initial assumption may be that at current geographical position SIM 1 supports LTE LB/HB and GSM HB and SIM 2 supports WCDMA LB and GSM LB/HB. The idle mode capabilities are typically limited by the hardware of the wireless device. Hence, according to some aspects, the initial set is equal to the network capabilities of the wireless device. According to the present standard, the wireless device reports the NW capabilities in a NW registration/attach phase.

In the first step, the wireless device 1 detects, S1, for a first connection 3a corresponding to a first subscriber identity 11a, a change in connection properties. This step implies that the wireless device registers any change associated with one of the subscriber identities that affects other identity. The processing circuitry 13 is configured to detect the change in connection properties of the radio circuitry 12. According to some aspects, the wireless device comprises a detector 131 configured for this purpose.

According to some aspects, this implies that there is some kind of event triggering the wireless device to re-determine its capabilities. For example one of the connections 3a, 3b moves into another cell or goes into active/idle mode. According to some aspects, the detecting S1 comprises detecting a transition from idle connection state to active connection state, or vice versa, of the first connection. Alternatively the change is just detected and registered and the following determination is e.g. performed on a regular basis. According to some aspects, the connection properties comprise at least one of: connection state, frequency bandwidth, carrier frequency, modulation, and power level. Even other changes such as change in MIMO mode or carrier aggregation may affect the other connection.

In the next step the wireless device 1 determines, S2, for at least one of the other subscriber identities 11b, a set of updated network capabilities, based on the changed connection properties of the first connection 3a. The processing circuitry 13 is configured to determine, S2, for at least one of the other subscriber identities 11b, a set of updated network capabilities. According to some aspects, the wireless device comprises a determiner 132 configured for this purpose. The determination may be performed in different ways. According to some aspects, the determining S2 comprises determining combinations of network capabilities feasible for connections in multi access mode. According to some aspects, the determining S2 comprises using a lookup table with combinations of network capabilities feasible for connections in multi access mode. By determining a set of feasible network capabilities that take into account factors like power requirement of amplifiers, carrier bands, the effect of intermodulation products on other carriers etc., problems with interference and hardware degradation may be avoided.

For example, the wireless device determines, based on the first and second set of possible RATs in idle mode, feasible combinations of RATs and/or carriers for dual active mode operation. There may be some simple rules, for example at dual mode only one LB and one HB are possible and LTE or WCDMA is only combinable with GSM.

According to some aspects of the proposed technique, the detecting S1 comprises detecting a handover or a handover request of the first connection, e.g. to another RAT or carrier. This is e.g. the case when the first subscriber identity 11a is in active state and moves or is requested to move into another cell using a different RAT or carrier. This implies e.g. that prior to Inter Frequency, IF, or Inter Radio Access Technology, IRAT, handover, HO, the method triggers for SIM1 11a, to determine if the HO to other RAT/carrier is a feasible combination with the RAT/carrier used for SIM2 11b, and if not, either deny HO, or disconnect first or second SIM. As mentioned above, according to the proposed technique, determination S2 of feasible combinations is performed every time inter frequency or inter RAT re-selection, is made on one of SIM1 and SIM2.

The updated network capabilities may be used in different ways as explained further in the upcoming sections.

One example is upon connection setup of a second subscriber identity, SIM2, 11b, connection i.e. when a first subscriber identity, SIM1, 11a, is in active mode using a first RAT/carrier frequency and a second subscriber identity, SIM2, 11b, is in idle mode. According to some aspects, the wireless device re-selects RAT and/or carrier frequency to another RAT/carrier frequency comprised in the determined feasible set of RAT/carriers that are combinable with the first RAT/carrier frequency for dual active mode communication. This re-selection is performed prior to initiating connection set up. According to some aspects, the method further comprises activating S3a a second connection corresponding to a second subscriber identity 11b using the respective determined set of updated network capabilities. The processing circuitry 13 is configured to activate S3a a second connection corresponding to a second subscriber identity 11b using the respective determined set of updated network capabilities. According to some aspects, the wireless device comprises an activator 133a configured for this purpose.

Hence, according to some aspects, the method further comprises reporting S3c at least one determined set of updated network capabilities to a respective communication network. The processing circuitry 13 is configured to report S3c at least one determined set of updated network capabilities to a respective communication network. According to some aspects, the wireless device 1 comprises a reporter 133c configured for this purpose. According to one variant, upon connection setup, the wireless device reports a UE capability corresponding to the subset of RATs and/or carriers that are feasible to combine with the RATs and/or carrier frequencies of other subscriber identities in the UE. According to the present standards, the UE capability is specifying the radio properties of the wireless device. These properties can be both hardware properties and different kind of connections supported by the wireless device. Then the set of network capabilities may involve other restrictions, e.g. UE category or no MIMO. According to some aspects, network capabilities comprise at least one of the following parameters: supported radio access technology, RAT, carrier frequency, MIMO capabilities, UE category, Radio Link Protocol parameters, radio parameters, measurement parameters, inter-RAT parameters, general parameters and other parameters. These parameters are for example defined in 3GPP TS 36.306 V12.0.0 (2014-03) for LTE/E-UTRA, while other specs exists for other RATs, and are briefly described below.

The field UE category defines a combined uplink and downlink capability, e.g. Maximum number of supported layers for spatial multiplexing in DL or Support for 64 Quadrature amplitude modulation, QAM, in Uplink, UL.

Radio Link Control, RLC, parameters defines e.g. transmission, TX, antenna selection support, Multiple In Multiple Out, MIMO capability (uplink and downlink), Cross-carrier scheduling, Transmission modes, Support of non-contiguous UL resource allocations.

Radio, RF, parameters include e.g. list of supported bands, supported band combinations (for carrier aggregation, CA, support), multiple timing advance support, simultaneous RX-TX (for inter-band Time-division duplexing, TDD, CA) support.

Measurement parameters defines e.g. whether gaps are needed to perform Inter-frequency measurements, whether gaps are needed to perform Inter-RAT measurements

Inter-RAT parameters contain many parameters needed to specify all different kinds of RAT combinations, e.g. support of UMTS Terrestrial Radio Access Frequency-division duplexing, UTRA FDD and if so list of such bands, support of UTRA TDD and if so list of such bands (one for each bandwidth).

Network capabilities may also comprises general parameters such as access stratum release - specifies release support (for layer 1-3 E-UTRA) or support for network based battery consumption optimization.

Other parameters that may be relevant are if UE supports of in-device coexistence indication or if UE supports of power preference indication.

In most communication protocols, the parties participating in the communication, exchange the information about its capability so that the each party does not request any capability which is not supported by its counterpart. This parameter is typically reported during the RACH procedure during connection setup. Hence, in order to change the UE capability, the wireless device 1 may need to first disconnect and then reconnect with the new capabilities. Hence, according to some aspects, the proposed method comprises terminating S3b at least one active connection based on the determined set of updated network capabilities. The processing circuitry 13 is configured to terminate S3b at least one active connection based on the determined set of updated network capabilities. According to some aspects, the wireless device comprises a terminator 133b configured for this purpose. One example is when a first subscriber identity 11a is connected 3a to a wireless cellular network 4a by LTE LB. The second subscriber identity 11b wants to change from idle into active mode. However, only a LTE LB connection is available to the second subscriber 11b. This connection 4b is not compatible, according to the determined set of updated network capabilities, with the connection 4a held by the first subscriber identity 11a. This means that in order to establish a second connection 3b, the first connection 3a, must disconnect in order to establish the second connection 3b.

Turning to figure 5, the initiator 130, the detector 131, the determiner 132, the activator 133a, the terminator 133b, the reporter 133c and the denier 133d are implemented in hardware or in software or in a combination thereof. The modules 130, 131, 132, 133a-d are according to some aspects implemented as a computer program stored in a memory 14 which run on the processing circuitry 13. The wireless device 1 is further configured to implement all the aspects of the disclosure as described in relation to the methods above. The wireless device 1 also comprises the corresponding modules. Hence, according to one aspect the disclosure relates to a computer program comprising computer program code which, when executed in a wireless device, causes the wireless device 1 to execute the methods described above and below.

If termination s3b is chosen, the wireless device may reconnect with another UE capability, using a feasible RAT and/or carrier. According to some aspects, the subscriber identities have different priorities e.g. voice, data, subscribers, SIM slot etc.

Alternatively, the network may be updated to support that the wireless device 1 reports new network capabilities, on own motion.

According to some aspects, the method further comprises denying S3d handover request of a second connection 3b corresponding to a second subscriber identity 11b if not complying with the respective determined set of updated network capabilities. The processing circuitry 13 is configured to deny S3d handover request of a second connection 3b corresponding to a second subscriber identity 11b if not complying with the respective determined set of updated network capabilities. According to some aspects, the wireless device comprises a denier 133d configured for this purpose.

Figure 4 is a state diagram illustrating the procedure of having dynamic RAT configuration sets for two SIM cards, SIM1 and SIM2. This example illustrated how the proposed method is performed in the different states and how the transitions between the states may trigger changes is determined network capabilities.

The state diagram comprises three states; state 40 wherein both connections of both SIMs are in idle mode, state 41 where the connection of one SIM is in active mode and state 42 where the connections of both SIMs are in active mode. The method described in figure 3 comprising detecting, S1, one connection going active/ending or changing and determining, S2, for the other SIM, an updated set of network capabilities, is repeatedly performed in all the states in figure 4, as will be further explained below.

The starting point is that both SIM cards and their associated connections to the networks are in idle mode 40, i.e. passive with only Received Signal Strength Indicator, RSSI, sniffing, cell search for inter-frequency cell reselection and control signal, i.e. paging, reception ongoing. In this state, co-existence in hardware is not a problem, since the device may signal different capabilities for respective SIM card. For instance, the network capabilities are LTE/WCDMA for SIM1 and GSM for SIM2, or possibly same RATs but different band support. This uses the fact that many operators have more than one frequency band per RAT supported on same geographical area.

The device may by a so called cell search easily determine, S2, which RAT and bands that are supported for respective operator at a given geographical area. In present networks this information is generally signaled upon registration when the subscriber, or in this case one subscriber identity, enters idle mode e.g. in the random access procedure.

Hence, according to some aspects of this disclosure, the wireless device signals to the two independent networks possible RAT configurations to use during the registration phases. In some embodiments a deregistration has to be made prior to a new registration with updated UE capabilities, i.e. supported RATs and supported frequency bands etc., labeled 1S and 2S for the respective operator. In idle mode, the limitation is only set by the RAT and carrier support of the device and not by the dual SIM configuration itself.

Once one of the SIM cards goes into active mode 401, e.g. SIM1, and establish a connection to a network by using a RAT configuration from the set 1S, the RAT configuration set associated with SIM2 will be updated and limited according to viable co-existence with the selected RAT configuration in 1S. The wireless device is now in state 41. In essence, the device will signal to the network associated with SIM2 an updated RAT configuration set, labeled 2S', during a registration phase. In some embodiments a de-registration i.e. "in activation" or "device power off" or "network detach", is made prior to a new registration such as "device power on" or "network attach", with updated UE capabilities, i.e. supported RATs and supported frequency carriers etc. This 2S' set will be updated continuously as the active connection of SIM1 may perform handover 413 to different RAT configurations within 1S during its active mode. If the active connection goes to idle mode 412, configuration set 2S' removes its limiting function and enters 2S again, and we are back in the initial state 40 with both SIM cards in idle mode.

On the other hand, when SIM2 goes active 411 when SIM1 is still in active mode, corresponding to state 42, the network will establish a second connection associated with SIM2 and select a RAT configuration from 2S' as this secures co-existence between the two concurrent connections. To secure handover inside the two established connections, 1S is also updated to 1S' where the RAT configuration set for SIM1 is adjusted to fit the 2S' in case of a hand-over request 421 in state 42. As soon handovers occur 413, the sets are updated to secure future possible handovers. Once a connection goes down 422, and the connection enters idle mode again, the device is back in the intermediate state 41 and acts accordingly.

Aspects of the disclosure are described with reference to the drawings, e.g., block diagrams and/or flowcharts. It is understood that several entities in the drawings, e.g., blocks of the block diagrams, and also combinations of entities in the drawings, can be implemented by computer program instructions, which instructions can be stored in a computer-readable memory, and also loaded onto a computer or other programmable data processing apparatus. Such computer program instructions can be provided to a processor of a general purpose computer, a special purpose computer and/or other programmable data processing apparatus to produce a machine, such that the instructions, which execute via the processor of the computer and/or other programmable data processing apparatus, create means for implementing the functions/acts specified in the block diagrams and/or flowchart block or blocks.

In some implementations and according to some aspects of the disclosure, the functions or steps noted in the blocks can occur out of the order noted in the operational illustrations. For example, two blocks shown in succession can in fact be executed substantially concurrently or the blocks can sometimes be executed in the reverse order, depending upon the functionality/acts involved. Also, the functions or steps noted in the blocks can according to some aspects of the disclosure be executed continuously in a loop.

In the drawings and specification, there have been disclosed exemplary aspects of the disclosure. However, many variations and modifications can be made to these aspects without substantially departing from the principles of the present disclosure. Thus, the disclosure should be regarded as illustrative rather than restrictive, and not as being limited to the particular aspects discussed above. Accordingly, although specific terms are employed, they are used in a generic and descriptive sense only and not for purposes of limitation.

It should be noted that although terminology from 3GPP LTE has been used herein to explain the example embodiments, this should not be seen as limiting the scope of the example embodiments to only the aforementioned system. Other wireless systems, including WCDMA, WiMax, UMB and GSM, may also benefit from the example embodiments disclosed herein.

The description of the example embodiments provided herein have been presented for purposes of illustration. The description is not intended to be exhaustive or to limit example embodiments to the precise form disclosed, and modifications and variations are possible in light of the above teachings or may be acquired from practice of various alternatives to the provided embodiments. The examples discussed herein were chosen and described in order to explain the principles and the nature of various example embodiments and its practical application to enable one skilled in the art to utilize the example embodiments in various manners and with various modifications as are suited to the particular use contemplated. The features of the embodiments described herein may be combined in all possible combinations of methods, apparatus, modules, systems, and computer program products. It should be appreciated that the example embodiments presented herein may be practiced in any combination with each other.

It should be noted that the word "comprising" does not necessarily exclude the presence of other elements or steps than those listed and the words "a" or "an" preceding an element do not exclude the presence of a plurality of such elements. It should further be noted that any reference signs do not limit the scope of the claims, that the example embodiments may be implemented at least in part by means of both hardware and software, and that several "means", "units" or "devices" may be represented by the same item of hardware.

The various example embodiments described herein are described in the general context of method steps or processes, which may be implemented in one aspect by a computer program product, embodied in a computer-readable medium, including computer-executable instructions, such as program code, executed by computers in networked environments. A computer-readable medium may include removable and non-removable storage devices including, but not limited to, Read Only Memory, ROM, Random Access Memory, RAM, compact discs, CDs, digital versatile discs, DVD, etc. Generally, program modules may include routines, programs, objects, components, data structures, etc. that performs particular tasks or implement particular abstract data types. Computer-executable instructions, associated data structures, and program modules represent examples of program code for executing steps of the methods disclosed herein. The particular sequence of such executable instructions or associated data structures represents examples of corresponding acts for implementing the functions described in such steps or processes.

In the drawings and specification, there have been disclosed exemplary embodiments. However, many variations and modifications can be made to these embodiments. Accordingly, although specific terms are employed, they are used in a generic and descriptive sense only and not for purposes of limitation, the scope of the embodiments being defined by the following claims.

## Claims

1. A method, performed in a wireless device (1), of handling multi access of more than one connection (3a, 3b), each connection (3a, 3b) corresponding to a respective subscriber identity (11a, 11b) and connecting the wireless device (1) to a respective wireless network (2a,2b), the method **characterized by**:
- detecting (S1), for a first connection (3a) corresponding to a first subscriber identity (11a), a change in connection properties involving a transition between connection states, or detecting a handover or handover request;
- determining (S2), for at least one of the other subscriber identities (11b), a set of updated network capabilities comprising combinations of network capabilities feasible for connections in multi-access mode, based on the changed connection properties of the first connection (3a);
- determining if a handover to another Radio Access Technology RAT or carrier is a feasible combination with the RAT or carrier used for a second subscriber identity (11b);
- activating (S3a) a second connection corresponding to the second subscriber identity (11b) using the respective determined set of updated network capabilities;
- reporting (S3c) at least one determined set of updated network capabilities to a respective communication network, wherein the wireless device reports a user equipment UE capability corresponding to the subset of RATs and/or carriers that are feasible to combine with the RATs and/or carrier frequencies of other subscriber identities(11b); and
- denying (S3d) a handover request of the second connection corresponding to a second subscriber identity (11b) if not complying with the respective determined set of updated network capabilities.

2. The method according to claim 1, wherein the detecting (S1) comprises detecting a transition from idle connection state to active connection state, or vice versa, of the first connection.

3. The method according to any of the preceding claims, wherein the determining (S2) comprises using a lookup table with combinations of network capabilities feasible for connections in multi access mode.

4. The method according to any of the preceding claims, wherein the connection properties comprises at least one of: connection state, frequency bandwidth, carrier frequency, modulation, and power level.

5. The method according to any of the preceding claims further comprising:
- setting (S0), for each subscriber identity, an initial set of network capabilities.

6. The method according to claim 5, wherein the initial set is equal to the network capabilities of the wireless device.

7. The method according to any of the preceding claims, wherein the subscriber identity is a Subscriber Identity Module, SIM.

8. The method according to any of the preceding claims, further comprising:
- terminating (S3b) at least one active connection based on the determined set of updated network capabilities.

9. The method according to any of the preceding claims, wherein the subscriber identities have different priorities.

10. The method according to any of the preceding claims, wherein network capabilities comprises at least one of the following parameters: supported radio access technology, carrier frequency, MIMO capabilities, UE category, Radio Link Protocol parameters, radio parameters, measurement parameters, inter-RAT parameters.

11. A wireless device (1), configured for handling multi access of more than one connection corresponding to a respective subscriber identity (11), the wireless device (1) comprising:
- at least two subscriber identities (11a, 11b);
- a radio communication interface (12) for communication with at least one communication network (2);
- **characterized by** processing circuitry (13) configured to cause the wireless device (1):
- -to detect, for a first connection (3a) corresponding to a first subscriber identity (11a), a change in connection properties, involving a transition between connection states, or detecting a handover or handover request, of the radio communication interface (12),
- -to determine, for at least one of the other subscriber identities (11b), a set of updated network capabilities comprising combinations of network capabilities feasible for connections in multi-access mode, based on the changed connection properties of the first connection (3a),
- -to activate (S3a) a second connection corresponding to a second subscriber identity (11b) using the respective determined set of updated network capabilities; to determine if a handover to another Radio Access Technology RAT or a carrier is a feasible combination with the RAT or carrier used for a second subscriber identity (11b);
- to report (S3c) at least one determined set of updated network capabilities to a respective communication network, wherein the wireless device reports a user equipment UE capability corresponding to the subset of RATs and/or carriers that are feasible to combine with the RATs and/or carrier frequencies of other subscriber identities(11b); and
- to deny (S3d) a handover request of a second connection corresponding to a second subscriber identity if not complying with the respective determined set of updated network capabilities.

12. The wireless device according to claim 11, wherein the processing circuitry (13) is further adapted:
- to set, for each subscriber identity, an initial a set of network capabilities.

13. The wireless device according to claim 11 or 12, wherein the subscriber identity is a Subscriber Identity Module, SIM.

14. The wireless device according to any of claims 11-13, wherein the processing circuitry (13) is further adapted:
- to terminate at least one active connection based on the determined set of updated network capabilities.

15. The wireless device according to any of claims 11-14, wherein the subscriber identities have different priorities.

16. A computer program comprising computer program code which, when executed in a wireless device, causes the wireless device to execute the methods according to any of the claims 1-10.

## Patentansprüche

1. In einer drahtlosen Vorrichtung (1) ausgeführtes Verfahren zum Handhaben eines Mehrfachzugriffs auf mehr als eine Verbindung (3a, 3b), wobei jede Verbindung (3a, 3b) einer jeweiligen Teilnehmerkennung (11a, 11b) entspricht, und zum Verbinden der drahtlosen Vorrichtung (1) mit einem jeweiligen drahtlosen Netzwerk (2a, 2b), wobei das Verfahren **gekennzeichnet ist durch**:
- Erkennen (S1), für eine erste Verbindung (3a), die einer ersten Teilnehmerkennung (11a) entspricht, einer Änderung der Verbindungseigenschaften, die einen Übergang zwischen Verbindungszuständen beinhaltet, oder Erkennen einer Übergabe oder Übergabeanforderung;
- Bestimmen (S2), für mindestens eine der anderen Teilnehmerkennungen (11b), eines Satzes von aktualisierten Netzwerkfähigkeiten, umfassend Kombinationen von Netzwerkfähigkeiten, welche für Verbindungen im Mehrfachzugriffsmodus machbar sind, basierend auf den geänderten Verbindungseigenschaften der ersten Verbindung (3a);
- Bestimmen, ob eine Übergabe an eine andere Funkzugangstechnologie RAT oder einen anderen Träger eine machbare Kombination mit der für eine zweite Teilnehmerkennung (11b) verwendeten RAT bzw. mit dem hierfür verwendeten Träger ist;
- Aktivieren (S3a) einer zweiten Verbindung, die der zweiten Teilnehmerkennung (11b) entspricht, unter Verwendung des jeweiligen bestimmten Satzes von aktualisierten Netzwerkfähigkeiten;
- Melden (S3c) mindestens eines bestimmten Satzes von aktualisierten Netzwerkfähigkeiten an ein jeweiliges Kommunikationsnetz, wobei die drahtlose Vorrichtung eine Fähigkeit einer Benutzereinrichtung UE entsprechend der Teilmenge von RATs und/oder Trägern meldet, die mit den RATs und/oder Trägerfrequenzen anderer Teilnehmerkennungen (11b) kombiniert werden können; und
- Ablehnen (S3d) einer Übergabeanforderung der zweiten Verbindung, die einer zweiten Teilnehmerkennung (11b) entspricht, wenn sie nicht mit dem jeweiligen bestimmten Satz von aktualisierten Netzwerkfähigkeiten übereinstimmt.

2. Verfahren nach Anspruch 1, wobei das Erkennen (S1) das Erkennen eines Übergangs vom Ruhezeitverbindungszustand zum aktiven Verbindungszustand, oder umgekehrt, der ersten Verbindung umfasst.

3. Verfahren nach einem der vorstehenden Ansprüche, wobei das Bestimmen (S2) die Verwendung einer Nachschlagetabelle mit Kombinationen von Netzwerkfähigkeiten umfasst, die für Verbindungen im Mehrfachzugriffsmodus machbar sind.

4. Verfahren nach einem der vorstehenden Ansprüche, wobei die Verbindungseigenschaften mindestens eines von Folgendem umfassen: Verbindungszustand, Frequenzbandbreite, Trägerfrequenz, Modulation und Leistungspegel.

5. Verfahren nach einem der vorstehenden Ansprüche, ferner umfassend:
- Einstellen (S0), für jede Teilnehmerkennung, eines anfänglichen Satzes von Netzwerkfähigkeiten.

6. Verfahren nach Anspruch 5, wobei der anfängliche Satz gleich den Netzwerkfähigkeiten der drahtlosen Vorrichtung ist.

7. Verfahren nach einem der vorstehenden Ansprüche, wobei die Teilnehmerkennung ein Teilnehmerkennungsmodul, SIM, ist.

8. Verfahren nach einem der vorstehenden Ansprüche, ferner umfassend:
- Beenden (S3b) mindestens einer aktiven Verbindung basierend auf dem bestimmten Satz von aktualisierten Netzwerkfähigkeiten.

9. Verfahren nach einem der vorstehenden Ansprüche, wobei die Teilnehmerkennungen unterschiedliche Prioritäten haben.

10. Verfahren nach einem der vorstehenden Ansprüche, wobei die Netzwerkfähigkeiten mindestens einen der folgenden Parameter umfassen: unterstützte Funkzugangstechnologie, Trägerfrequenz, MI-MO-Fähigkeiten, UE-Kategorie, Funkverbindungsprotokoll-Parameter, Funkparameter, Messparameter, Inter-RAT-Parameter.

11. Drahtlose Vorrichtung (1), konfiguriert zum Handhaben eines Mehrfachzugriffs auf mehr als eine Verbindung, die einer jeweiligen Teilnehmerkennung (11) entspricht, wobei die drahtlose Vorrichtung (1) Folgendes umfasst:
- mindestens zwei Teilnehmerkennungen (11a, 11b);
- eine Funkkommunikationsschnittstelle (12) zur Kommunikation mit mindestens einem Kommunikationsnetz (2);
- **gekennzeichnet durch** eine Verarbeitungsschaltung (13), die konfiguriert ist, um die drahtlose Vorrichtung (1) zu Folgendem zu veranlassen:
- Erkennen, für eine erste Verbindung (3a), die einer ersten Teilnehmerkennung (11a) entspricht, einer Änderung der Verbindungseigenschaften, die einen Übergang zwischen Verbindungszuständen beinhaltet, oder Erkennen einer Übergabe oder Übergabeanforderung, der Funkkommunikationsschnittstelle (12),
- Bestimmen, für mindestens eine der anderen Teilnehmerkennungen (11b), eines Satzes von aktualisierten Netzwerkfähigkeiten, umfassend Kombinationen von Netzwerkfähigkeiten, welche für Verbindungen im Mehrfachzugriffsmodus machbar sind, basierend auf den geänderten Verbindungseigenschaften der ersten Verbindung (3a),
- Aktivieren (S3a) einer zweiten Verbindung, die einer zweiten Teilnehmerkennung (11b) entspricht, unter Verwendung des jeweiligen bestimmten Satzes von aktualisierten Netzwerkfähigkeiten; Bestimmen, ob eine Übergabe an eine andere Funkzugangstechnologie RAT oder einen anderen Träger eine machbare Kombination mit der für eine zweite Teilnehmerkennung (11b) verwendeten RAT bzw. mit dem hierfür verwendeten Träger ist;
- Melden (S3c) mindestens eines bestimmten Satzes von aktualisierten Netzwerkfähigkeiten an ein jeweiliges Kommunikationsnetz, wobei die drahtlose Vorrichtung eine Fähigkeit einer Benutzereinrichtung UE entsprechend der Teilmenge von RATs und/oder Trägern meldet, die mit den RATs und/oder Trägerfrequenzen anderer Teilnehmerkennungen (11b) kombiniert werden können; und
- Ablehnen (S3d) einer Übergabeanforderung der zweiten Verbindung, die einer zweiten Teilnehmerkennung entspricht, wenn sie nicht mit dem jeweiligen bestimmten Satz von aktualisierten Fähigkeiten übereinstimmt.

12. Drahtlose Vorrichtung nach Anspruch 11, wobei die Verarbeitungsschaltung (13) ferner angepasst ist zum:
- Einstellen, für jede Teilnehmerkennung, eines anfänglichen Satzes von Netzwerkfähigkeiten.

13. Drahtlose Vorrichtung nach Anspruch 11 oder 12, wobei die Teilnehmerkennung ein Teilnehmerkennungsmodul, SIM, ist.

14. Drahtlose Vorrichtung nach einem der Ansprüche 11 bis 13, wobei die Verarbeitungsschaltung (13) ferner angepasst ist zum:
- Beenden mindestens einer aktiven Verbindung basierend auf dem bestimmten Satz von aktualisierten Netzwerkfähigkeiten.

15. Drahtlose Vorrichtung nach einem der Ansprüche 11 bis 14, wobei die Teilnehmerkennungen unterschiedliche Prioritäten haben.

16. Computerprogramm, umfassend Computerprogrammcode, der, wenn er in einer drahtlosen Vorrichtung ausgeführt wird, die drahtlose Vorrichtung veranlasst, die Verfahren nach einem der Ansprüche 1 bis 10 auszuführen.

## Revendications

1. Procédé, mis en oeuvre dans un dispositif sans fil (1), de traitement d'accès multiple de plus d'une connexion (3a, 3b), chaque connexion (3a, 3b) correspondant à une identité d'abonné respective (11a, 11b) et de connexion du dispositif sans fil (1) à un réseau sans fil respectif (2a, 2b), le procédé **caractérisé par** :
- la détection (S1), pour une première connexion (3a) correspondant à une première identité d'abonné (11a), d'un changement dans des propriétés de connexion impliquant une transition entre des états de connexion, ou la détection d'un transfert ou d'une demande de transfert ;
- la détermination (S2), pour au moins l'une des autres identités d'abonné (11b), d'un ensemble de capacités de réseau mises à jour comprenant des combinaisons de capacités de réseau réalisables pour des connexions en mode d'accès multiple, sur la base des propriétés de connexion changées de la première connexion (3a) ;
- le fait de déterminer si un transfert vers une autre technologie d'accès radio RAT ou porteuse est une combinaison réalisable avec la RAT ou porteuse utilisée pour une deuxième identité d'abonné (11b) ;
- l'activation (S3a) d'une deuxième connexion correspondant à la deuxième identité d'abonné (11b) en utilisant l'ensemble déterminé respectif de capacités de réseau mises à jour ;
- la déclaration (S3c) d'au moins un ensemble déterminé de capacités de réseau mises à jour à un réseau de communication respectif, dans lequel le dispositif sans fil déclare une capacité d'équipement utilisateur UE correspondant au sous-ensemble de RAT et/ou de porteuses qui peuvent être combinées avec les RAT et/ou fréquences de porteuse des autres identités d'abonné (11b) ; et
- le refus (S3d) d'une demande de transfert de la deuxième connexion correspondant à une deuxième identité d'abonné (11b) si elle ne respecte pas l'ensemble déterminé respectif de capacités de réseau mises à jour.

2. Procédé selon la revendication 1, dans lequel la détection (S1) comprend la détection d'une transition d'un état de connexion inactif à un état de connexion actif, ou inversement, de la première connexion.

3. Procédé selon l'une quelconque des revendications précédentes, dans lequel la détermination (S2) comprend l'utilisation d'une table de correspondance avec des combinaisons de capacités de réseau réalisables pour des connexions en mode d'accès multiple.

4. Procédé selon l'une quelconque des revendications précédentes, dans lequel les propriétés de connexion comprennent au moins l'un parmi : un état de connexion, une bande passante de fréquence, une fréquence de porteuse, une modulation, et un niveau de puissance.

5. Procédé selon l'une quelconque des revendications précédentes, comprenant en outre :
- l'établissement (S0), pour chaque identité d'abonné, d'un ensemble initial de capacités de réseau.

6. Procédé selon la revendication 5, dans lequel l'ensemble initial est égal aux capacités de réseau du dispositif sans fil.

7. Procédé selon l'une quelconque des revendications précédentes, dans lequel l'identité d'abonné est un module d'identité d'abonné, SIM.

8. Procédé selon l'une quelconque des revendications précédentes, comprenant en outre :
- la fin (S3b) d'au moins une connexion sur la base de l'ensemble déterminé de capacités de réseau mises à jour.

9. Procédé selon l'une quelconque des revendications précédentes, dans lequel les identités d'abonné ont des priorités différentes.

10. Procédé selon l'une quelconque des revendications précédentes, dans lequel les capacités de réseau comprennent au moins l'un des paramètres suivants : technologie d'accès radio prise en charge, fréquence de porteuse, capacités MIMO, catégorie d'UE, paramètres de protocole de liaison radio, paramètres radio, paramètres de mesure, paramètres inter-RAT.

11. Dispositif sans fil (1), configuré pour le traitement d'un accès multiple de plus d'une connexion correspondant à une identité d'abonné respective (11), le dispositif sans fil (1) comprenant :
- au moins deux identités d'abonné (11a, 11b) ;
- une interface de communication radio (12) pour une communication avec au moins un réseau de communication (2) ;
- **caractérisé par** un circuit de traitement (13) configuré pour amener le dispositif sans fil (1) :
- à détecter, pour une première connexion (3a) correspondant à une première identité d'abonné (11a), un changement dans des propriétés de connexion, impliquant une transition entre des états de connexion, ou une détection d'un transfert ou demande de transfert, de l'interface de communication radio (12),
- à déterminer, pour au moins l'une des autres identités d'abonné (11b), un ensemble de capacités de réseau mises à jour comprenant des combinaisons de capacités de réseau réalisables pour des connexions en mode d'accès multiple, sur la base des propriétés de connexion changées de la première connexion (3a),
- à activer (S3a) une deuxième connexion correspondant à une deuxième identité d'abonné (11b) en utilisant l'ensemble déterminé respectif de capacités de réseau mises à jour ; à déterminer si un transfert vers une autre technologie d'accès radio RAT ou porteuse est une combinaison réalisable avec la RAT ou porteuse utilisée pour une deuxième identité d'abonné (11b) ;
- à déclarer (S3c) au moins un ensemble déterminé de capacités de réseau mises à jour à un réseau de communication respectif, dans lequel le dispositif sans fil déclare une capacité d'équipement utilisateur UE correspondant au sous-ensemble de RAT et/ou de porteuses qui peuvent être combinées avec les RAT et/ou fréquences de porteuse des autres identités d'abonné (11b) ; et
- à refuser (S3d) une demande de transfert d'une deuxième connexion correspondant à une deuxième identité d'abonné si elle ne respecte pas l'ensemble déterminé respectif de capacités de réseau mises à jour.

12. Dispositif sans fil selon la revendication 11, dans lequel le circuit de traitement (13) est en outre conçu :
- pour établir, pour chaque identité d'abonné, d'un ensemble initial de capacités de réseau.

13. Dispositif sans fil selon la revendication 11 ou 12, dans lequel l'identité d'abonné est un module d'identité d'abonné, SIM.

14. Dispositif sans fil selon l'une quelconque des revendications 11 à 13, dans lequel le circuit de traitement (13) est en outre conçu :
- pour mettre fin à au moins une connexion active sur la base de l'ensemble déterminé de capacités de réseau mises à jour.

15. Dispositif sans fil selon l'une quelconque des revendications 11 à 14, dans lequel les identités d'abonné ont des priorités différentes.

16. Programme informatique comprenant un code de programme informatique qui, lorsqu'il est exécuté dans un dispositif sans fil, amène le dispositif sans fil à exécuter les procédés selon l'une quelconque des revendications 1 à 10.
